Europäisches Patentamt

European Patent Office

Office européen des brevets

(11) Veröffentlichungsnummer : **0 038 944**
**B1**

(12) **EUROPÄISCHE PATENTSCHRIFT**

(45) Veröffentlichungstag der Patentschrift :
13.06.84

(51) Int. Cl.³ : **B 23 D 61/00**

(21) Anmeldenummer : **81102366.2**

(22) Anmeldetag : **28.03.81**

(54) **Sägeblatt.**

(30) Priorität : **30.04.80 DE 3016660**

(43) Veröffentlichungstag der Anmeldung :
**04.11.81 Patentblatt 81/44**

(45) Bekanntmachung des Hinweises auf die Patenterteilung : **13.06.84 Patentblatt 84/24**

(84) Benannte Vertragsstaaten :
**BE DE FR GB IT LU**

(56) Entgegenhaltungen :
**DD-A-  135 864**
**DE-A- 2 405 244**
**DE-C-   67 165**
**DE-C-  894 763**
**DE-C- 1 092 638**
**US-A- 4 135 421**

(73) Patentinhaber : **Grassmann, Günther**
**Eddesse**
**D-3155 Edemissen 4 (DE)**

(72) Erfinder : **Grassmann, Günther**
**Eddesse**
**D-3155 Edemissen 4 (DE)**

(74) Vertreter : **Gramm, Werner, Prof. Dipl.-Ing. et al**
**Patentanwälte Gramm + Lins Theo-**
**dor-Heuss-Strasse 2**
**D-3300 Braunschweig (DE)**

## Beschreibung

Die Erfindung betrifft ein Sägeblatt mit Feinverzahnung, insbesondere Kreissägeblatt, zum Trennen und Schneiden von widerstandsstarkem Material in heißem oder kaltem Zustand, wobei die im Querschnitt in Bewegungsrichtung der Zähne verhältnismäßig schmalen Zähne gleiche Breite wie die Blattdicke sowie eine durchgehende Schneidkante aufweisen und zwischen sich zur Aufnahme der Schnittsubstanz Aufnahmeräume bilden, die zu den beiden gegenüberliegenden Seitenflächen des Sägeblatts offen sind und eine Tiefe aufweisen, die der Höhe der Zähne entspricht.

Derartige Sägen werden insbesondere für die Bearbeitung von widerstandsstarkem Material eingesetzt, dienen also z. B. zum Trennen und Schneiden von Walzstraßenerzeugnissen in kaltem oder heißem Zustand. Bisher ist dies nur bei verhältnismäßig kleinen Profilen möglich. Da bei einer Feinverzahnung eine Vielzahl von Zähnen untergebracht werden muß, kann jeder Zahn nur einen verhältnismäßig schmalen Querschnitt — gesehen in Bewegungsrichtung der Zähne — aufweisen. Um den Zähnen dennoch eine insbesondere für die Bearbeitung von widerstandsstarkem Material ausreichende Festigkeit zu verleihen, war man bisher der Auffassung, die Zahnhöhe niedrig halten zu müssen. Konstruktionsbedingt ergaben sich dadurch verhältnismäßig kleine Aufnahmeräume, die sich schon nach verhältnismäßig kurzen Schnittstrecken zusetzen und dadurch zu Auftragsschweißungen führen können. Deshalb waren bisher großdimensionale Schnittflächen nicht möglich.

Der Erfindung liegt somit die Aufgabe zugrunde, das eingangs erläuterte Sägeblatt so zu verbessern, daß auch eine Feinverzahnung ohne Beeinträchtigung ihrer Standzeit mehr Schnittsubstanz aufzunehmen vermag.

Diese Aufgabe wird gemäß der Erfindung dadurch gelöst, daß in Schnittrichtung gesehen abwechselnd jeder Aufnahmeraum nur in der einen bzw. der gegenüberliegenden Seitenfläche des Sägeblatts eine der Höhe der Zähne entsprechende Tiefe aufweist, von der der Boden jedes Aufnahmeraumes in Form einer geradlinig verlaufenden Schräge zur gegenüberliegenden Seitenfläche verläuft und hier eine Tiefe aufweist, die mehrfach größer ist als die Höhe der Zähne.

Hierdurch erhält man eine Art Verbundverzahnung, bei der sich die Zähne in ihrem Fußbereich an jeweils einer Blattseite des Sägeblatts gegenüber dem nachfolgenden Zahn abstützen können. Hieraus ergibt sich eine überraschend hohe Elastizität, die gerade die Bearbeitung von zähem, widerstandsstarkem Material, wie es sich bei Walzstraßenerzeugnissen darstellt, mit großer Standzeit ermöglicht. Bei gleichem Zahnspitzenabstand läßt sich in den Aufnahmeräumen des erfindungsgemäßen Sägeblatts im Vergleich zu einem herkömmlichen Sägeblatt erheblich mehr Schnittsubstanz aufnehmen und zuverlässig abführen. Trotz dieser erheblichen Vergrößerung der Aufnahmeräume wird aber die Festigkeit der Zähne nicht beeinträchtigt. Vielmehr führt die spiegelsymmetrische Ausbildung nicht nur zu der bereits genannten hohen Elastizität der Verbundverzahnung, sondern auch zu einer besonders günstigen Kühlung an gerade den kritischen Stellen. Der genannte Verbund führt zu einer gleichmäßigen Beaufschlagung der Zähne mit Zug- und Druckkräften.

Mit dem neuen Sägeblatt lassen sich bei einem Zahnspitzenabstand von beispielsweise 5 mm auch solche Querschnitte schneiden, die mit einer herkömmlichen Verzahnung nicht hätten durchtrennt werden können. Durch die sehr tief ausgebildeten Aufnahmeräume ist eine großflächige und damit schnelle Kühlung möglich ; ein Hitzestau kann vermieden werden, da die gefährdete Stelle des Sägezahns relativ dünnwandig ausgebildet ist, so daß die Wärme nach beiden Seiten schnell abfließen kann.

Lediglich das eine verhältnismäßig geringe Höhe aufweisende Verschleißteil jedes Zahnes ist freitragend und hat somit nur eine sehr geringe Hebelwirkung, die sich durch die nunmehr mögliche Anordnung einer Vielzahl von Zähnen weiter minimieren läßt. Durch den Verschleiß der Zähne wird die Aufnahmekapazität der Aufnahmeräume kaum beeinträchtigt. Vor allem aber lassen sich die Aufnahmeräume bei Instandsetzungen des Sägeblattes nach unten praktisch beliebig weiter ausarbeiten, während im oberen Teil nur eine geringe Nacharbeit erforderlich ist.

Durch das neue Verbundsystem der Zähne untereinander lassen sich die gefürchteten Rißbildungen im Zahngrund verhindern.

Die neue Feinverzahnung ermöglicht nunmehr auch großdimensionierte Schnittflächen mit entsprechend großem Spananfall. Daher können auch Kreissägeblätter mit verhältnismäßig großem Durchmesser mit der erfindungsgemäßen Feinverzahnung versehen werden. Dabei ergibt sich als weiterer Vorteil, daß sich die Zahnabmessungen für alle Kreissägeblatt-Durchmesser konstant halten lassen.

In der Zeichnung sind ein Beispiel für ein herkömmliches Sägeblatt sowie eine beispielsweise Ausführungsform der Erfindung dargestellt. Es zeigen :

Figur 1 in isometrischer Darstellung einen Ausschnitt aus einem bekannten Sägeblatt und

Figur 2 ein Sägeblatt gemäß der Erfindung in einer Darstellung gemäß Figur 1.

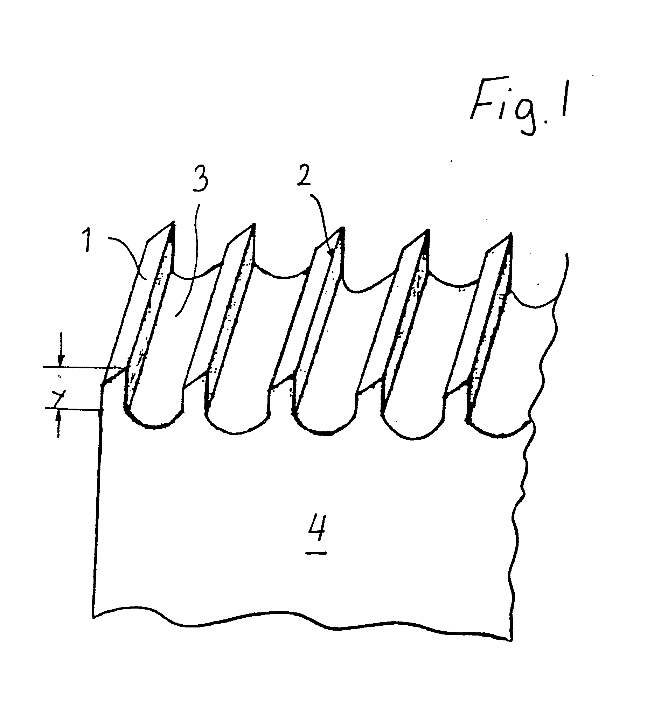

Bei dem in Figur 1 dargestellten vorbekannten Sägeblatt handelt es sich um ein Segment eines Kreissägeblatts, dessen Zähne 1 sich über die volle Blattbreite erstrecken und eine durchgehende Schneidkante 2 aufweisen. Zwischen den Zähnen 1 ist jeweils ein Aufnahmeraum 3 zur Aufnahme der Schnittsubstanz vorgesehen. Es ist erkennbar, daß bei diesem bekannten Sägeblatt die Höhe der Zähne 1 der Tiefe des Aufnahmeraumes 3 entspricht, so daß das Aufnahmevolumen der Aufnahmeräume in erster Linie von der Höhe der Zähne 1 bestimmt wird.

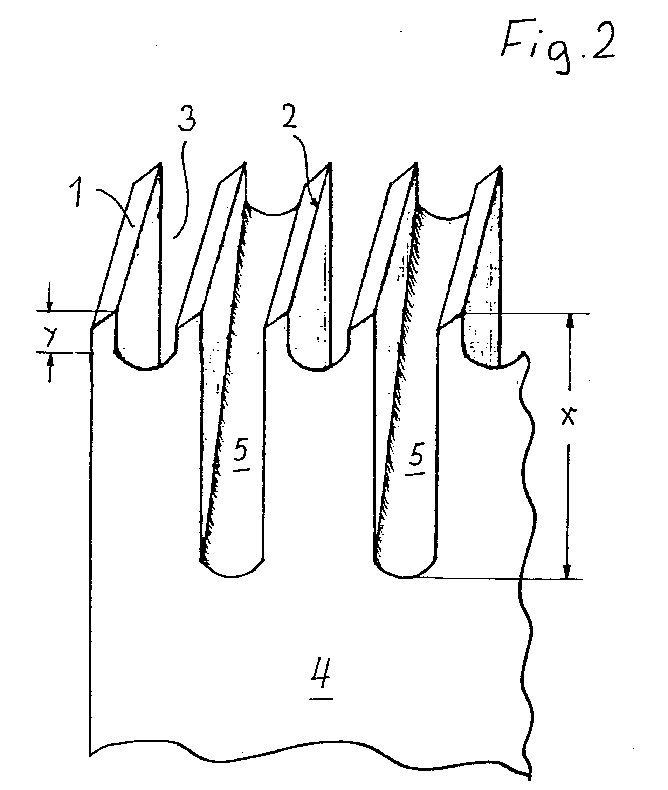

Auch bei dem in Figur 2 dargestellten Ausführungsbeispiel für ein Sägeblatt gemäß der Erfindung handelt es sich um ein Segment eines Kreissägeblatts. Um auch optisch einen Vergleich zu der vorbekannten Säge gemäß Figur 1 zu ermöglichen wurde für beide Ausführungsbeispiele der gleiche Zahnspitzenabstand gewählt. Figur 2 läßt erkennen, daß bei der erfindungsgemäßen Ausführungsform jeder Aufnahmeraum 3 abwechselnd nur in der einen bzw. der gegenüberliegenden Seitenfläche 4 des Sägeblattes stirnseitig eine Tiefe x aufweist, die mehrfach größer ist als die Höhe y der Zähne 1. Der Boden 5 jedes Aufnahmeraumes bildet bei dem dargestellten Ausführungsbeispiel eine geradlinig verlaufende Schräge und ist als Kehlung ausgebildet.

Die erfindungsgemäße Ausführungsform kann auch bei Sägeblättern, die kein Kreissägeblatt sind, angewendet werden. Außerdem ist es möglich, die Aufnahmeräume 3 bezogen auf das Sägeblatt schräg anzuordnen.

## Ansprüche

1. Sägeblatt mit Feinverzahnung, insbesondere Kreissägeblatt, zum Trennen und Schneiden von widerstandsstarkem Material in heißem oder kaltem Zustand, wobei die im Querschnitt in Bewegungsrichtung der Zähne verhältnismäßig schmalen Zähne (1) gleiche Breite wie die Blattdicke sowie eine durchgehende Schneidkante (2) aufweisen und zwischen sich zur Aufnahme der Schnittsubstanz Aufnahmeräume (3) bilden, die zu den beiden gegenüberliegenden Seitenflächen (4) des Sägeblatts offen sind und eine Tiefe aufweisen, die der Höhe (y) der Zähne (1) entspricht, dadurch gekennzeichnet, daß in Schnittrichtung gesehen abwechselnd jeder Aufnahmeraum (3) nur in der einen bzw. der gegenüberliegenden Seitenfläche (4) des Sägeblatts eine der Höhe (y) des Zähne (1) entsprechende Tiefe aufweist, von der der Boden (5) jedes Aufnahmeraumes (3) in Form einer geradlinig verlaufenden Schräge zur gegenüberliegenden Seitenfläche (4) verläuft und hier eine Tiefe (x) aufweist, die mehrfach größer ist als die Höhe (y) der Zähne (1).

2. Sägeblatt nach Anspruch 1, dadurch gekennzeichnet, daß die Schneidkanten (2) der Zähne (1) parallel zueinander verlaufen.

3. Sägeblatt nach Anspruch 1 oder 2, dadurch gekennzeichnet, daß die beiden durch die Zähne (1) gebildeten Seitenwandungen eines Aufnahmeraumes (3) parallel zueinander liegen.

4. Sägeblatt nach Anspruch 1 oder 2, dadurch gekennzeichnet, daß sich der Aufnahmeraum (3) radial nach innen konisch verjüngt.

5. Sägeblatt nach Anspruch 1 oder 4, dadurch gekennzeichnet, daß sich der Aufnahmeraum (3) zu der Seitenfläche (4) des Sägeblattes konisch erweitert, in der er die größere Tiefe (x) aufweist.

6. Sägeblatt nach einem der vorhergehenden Ansprüche, dadurch gekennzeichnet, daß der Boden (5) jedes Aufnahmeraumes (3) als Kehlung ausgebildet ist.

## Claims

1. Saw blade with fine toothing, in particular circular saw blade, for separating and cutting highly resistant material in hot or cold condition, whereby the teeth (1) which are relatively narrow in section in the direction of movement of the teeth have a width equal to the thickness of the blade as well as uninterrupted cutting edge (2) and form between them spaces (3) for receiving the cutting residue, which spaces open along the two opposed side faces (4) of the saw blade and have a depth which corresponds to the height (y) of the teeth (1), characterised in that seen in the cutting direction, each alternate receiving space (3) has a depth, corresponding to the height (y) of the teeth (1) only on the one or respectively the other side face (4) of the saw blade, from which depth the bottom (5) of each receiving space (3) runs in a straight incline to the opposed side face (4) and here has a depth (x) which is several times the height (y) of the teeth (1).

2. Saw blade according to claim 1, characterised in that the cutting edges (2) of the teeth (1) extend parallel to each other.

3. Saw blade according to claim 1 or claim 2, characterised in that the two side walls of a receiving space (3) formed by the teeth (1) lie parallel to each other.

4. Saw blade according to claim 1 or claim 2, characterised in that the receiving space (3) tapers conically in a radially inward direction.

5. Saw blade according to claim 1 or claim 4, characterised in that the receiving space (3) widens conically in the direction of that side face (4) of the saw blade in which it has the larger depth (x).

6. Saw blade according to one of the preceding claims, characterised in that the bottom (5) of each receiving space (3) is shaped as a chamfered groove.

## Revendications

1. Lame de scie à denture fine, en particulier lame de scie circulaire, destinée à tronçonner et à scier des matériaux à haute résistance, à l'état chaud ou à l'état froid, pour laquelle les dents (1), relativement étroites en coupe dans le sens de leur mouvement, présentent une largeur égale à l'épaisseur de la lame, ainsi qu'une arête de coupe (2) s'étendant d'un côté à l'autre, et forment entre elles des réceptacles (3) pour recueillir la matière coupée, réceptacles qui sont ouverts sur les deux faces latérales opposées (4) de la lame de scie et qui présentent une profondeur correspondant à la hauteur (y) des dents (1), caractérisée par le fait que, vu dans le sens de la coupe, chaque réceptacle (3) présente alternativement, dans l'une seulement des faces latérales (4) de la lame de scie, ou dans celle qui lui est opposée, une profondeur qui correspond à la hauteur (y) des dents (1), face à partir de laquelle le fond (5) de chaque réceptacle (3) s'étend en forme de déclivité de tracé rectiligne jusqu'à la face latérale opposée (4), et présente en cet endroit une profondeur (x) plusieurs fois supérieure à la hauteur (y) des dents (1).

2. Lame de scie conforme à la revendication 1, caractérisée par le fait que les arêtes de coupe (2) des dents (1) s'étendent parallèlement les unes aux autres.

3. Lame de scie conforme à la revendication 1 ou à la revendication 2, caractérisée par le fait que les deux cloisons latérales d'un réceptacle (3), formées par les dents (1), sont parallèles l'une à l'autre.

4. Lame de scie conforme à la revendication 1 ou à la revendication 2, caractérisée par le fait que le réceptacle (3) se rétrécit radialement vers l'intérieur suivant un cône.

5. Lame de scie conforme à la revendication 1 ou à la revendication 4, caractérisée par le fait que le réceptacle (3) s'élargit en forme de cône vers la face latérale (4) de la lame de scie, face dans laquelle il présente la plus grande profondeur (x).

6. Lame de scie conforme à l'une des revendications précédentes, caractérisée par le fait que le fond (5) de chaque réceptacle (3) a la configuration d'une gorge.

Fig. 1

Fig.2